# EUROPÄISCHE PATENTSCHRIFT

(11) **EP 4 543 642 B1**
(45) Veröffentlichungstag und Bekanntmachung des Hinweises auf die Patenterteilung: **14.01.2026**
(21) Anmeldenummer: 23732998.2
(22) Anmeldetag: 19.06.2023
(51) Int. Cl.: B25J 19/00, F16G 13/16, F16C 1/10

(54) **ENERGIEFÜHRUNGSKETTE MIT ZUGSEIL-DETEKTORANORDNUNG**
ENERGY CHAIN HAVING A TRACTION CABLE DETECTOR ARRANGEMENT
CHAÎNE D'ÉNERGIE DOTÉE D'UN AGENCEMENT DE DÉTECTEUR À CÂBLE DE TRACTION

(30) Priorität: 21.06.2022 DE 202022103458 U
(43) Veröffentlichungstag der Anmeldung: 30.04.2025
(73) Patentinhaber: Igus GmbH, 51147 Köln (DE)
(72) Erfinder: JAEKER, Thilo-Alexander, 53757 Sankt Augustin (DE)
(74) Vertreter: Lippert Stachow Patentanwälte Rechtsanwälte
(86) Internationale Anmeldenummer: PCT/EP2023/066497
(87) Internationale Veröffentlichungsnummer: WO 2023/247458

(56) Entgegenhaltungen:
- WO-A1-2015/118143
- DE-A1- 102014 112 613

## Beschreibung

Die Erfindung betrifft allgemein das Gebiet der Energieführungsketten bzw. dynamischen Leitungsführungen zum Führen einer oder mehrerer Leitungen, wie Kabeln, Schläuchen oder dgl., zwischen zwei Anschlussstellen, von denen mindestens eine relativ zur anderen beweglich ist.

Die Erfindung ist nicht auf eine besondere Bauart der Energieführungskette bzw. dynamischen Leitungsführung beschränkt. Typisch haben Energieführungsketten eine Vielzahl in einer Kettenlängsrichtung miteinander verbundener Glieder bzw. Segmente welche gegeneinander um mindestens eine Schwenkachse oder ggf. auch mehrere Schwenkachsen abwinkelbar sind.

Energieführungsketten, insbesondere solche, welche gegen äußere Einwirkung anwendungsbedingt nur unvollständig geschützt werden können, können im Betrieb beschädigt werden, z.B. durch einen blockierenden Fremdkörper. Hierbei kann es zu einem teilweisen oder vollständigen Bruch kommen. Auch bei geschützten Energieführungsketten kann es, z.B. durch übermäßigen Verschleiß, überhöhte Temperaturen oder andere Randbedingungen außerhalb eines Sollbereichs, oder einfach durch Überschreiten der Lebensdauer zu einem Versagen in der Energieführungskette kommen. Ein Bruch hat im schlimmsten Fall einen Abriss einer oder mehrerer der geführten Leitungen zur Folge, was zu einem Ausfall der versorgten Maschine oder Anlage führen kann.

Die Erfindung betrifft deshalb insbesondere eine Energieführungskette mit einer Anordnung zur Überwachung der Energieführungskette (Engl. "monitoring arrangement"), das insbesonder zum Schutz gegen einen Abriss der geführten Leitung bzw. Leitungen nutzbar ist, sowie ein entsprechendes Überwachungssystem (Engl. "monitoring system"). Die Erfindung betrifft ferner auch eine Detektor-Anordnung (Engl. " detector arrangement") zur Überwachung einer Energieführungskette.

Eine gattungsgemäße Anordnung zur Überwachung der Energieführungskette, umfassend einen Detektor und ein Zugseil, welches in Kettenlängsrichtung verläuft und mechanisch mit dem Detektor zusammenwirkt, insbesondere zur Erfassung eines Bruchs in der Energieführungskette, ist bereits in WO 2015/118143 A1 durch die Anmelderin vorgeschlagen worden. Dieses System ist am Markt erfolgreich, bietet jedoch einige Verbesserungspotentiale. Einerseits ist die Führung des Zugseils in der Kette, gemäß WO 2015/118143 A1 auf der neutralen Faser der Energieführungskette, nur mit erhöhtem Material und Montageaufwand möglich. Weiterhin ist eine relativ aufwendige Sensorik im Detektor, z.B. mit einem Inkrementalgeber als Wegsensor erforderlich, dessen Auswertung wegen je nach Anwendung unterschiedlicher Kettenlängen z.T. an die Anwendung angepasst werden muss. Weiterhin ist die Lösung aus WO 2015/118143 A1 nicht ohne weiteres für andere Energieführungsketten verwertbar. Die Lösung aus WO 2015/118143 A1 kann z.B. insbesondere nicht ohne weiteres bei sog. Roboterketten (Energieführungsketten für Gelenkarmroboter) mit räumlich gegeneinander auslenkbaren Gliedern, wie z.B. in WO 2004/093279 A1 vorgeschlagen, angewendet werden.

Weiterer Stand der Technik zu Überwachungssystemen ist ebenfalls in der Einleitung der WO 2015/118143 A1 gewürdigt, auf welche zur Verkürzung verwiesen sei. Ein Bowdenzugaggregat mit einem Bowdenzugschalter ist in der DE 10 2014 112 613 A1 beschrieben.

Ausgehend vom vorstehenden Stand der Technik, insbesondere von einer Überwachung mit Zugseil gemäß WO 2015/118143 A1 ist es eine erste Aufgabe der vorliegenden Erfindung, eine für unterschiedlichste Energieführungsketten und/oder Anwendungen günstigere bzw. besser geeignete Lösung vorzuschlagen. Dabei soll die Lösung möglichst robust und langlebig sein und/oder insbesondere eine Verwendung in Energieführungsketten für Gelenkarmroboter mit räumlich gegeneinander auslenkbaren Gliedern ermöglichen. Weiterhin soll die Lösung vorzugsweise eine Vereinfachung der Sensorik im Detektor bzw. des Detektors ermöglichen.

Die erstgenannte Aufgabe wird gelöst durch eine Energieführungskette mit Detektor-Anordnung nach Anspruch 1 und unabhängig hiervon durch eine Detektor-Anordnung nach Anspruch 14. Vorteilhafte Weiterbildungen ergeben sich aus den Unteransprüchen bzw. den Nebenansprüchen 16 und 18.

Die erfindungsgemäße Energieführungskette, hat insbesondere eine Anordnung zur Überwachung der Energieführungskette, umfassend einen Detektor und ein Zugseil, welches in Kettenlängsrichtung verläuft und mechanisch mit dem Detektor zusammenwirkt, insbesondere zur Erfassung eines Bruchs in der
Energieführungskette.

Die erfindungsgemäße Energieführungskette, zeichnet sich zunächst dadurch aus, dass die Anordnung eine flexible, in einer Zugrichtung drucksteife Außenhülle aufweist, in welcher zumindest ein Längsabschnitt des Zugseils geführt ist, wobei die Außenhülle insbesondere gegenüber einer zur Vorspannung genutzten Feder hinreichend drucksteif bzw. formfest und/oder zur Nutzung als Zugseil-Außenhülle hinreichend druckfest ist. Sie zeichnet sich weiterhin dadurch aus, dass die Außenhülle mit dem darin verlaufenden Längsabschnitt des Zugseils zumindest entlang eines zu überwachenden Längsabschnitts der Energieführungskette, insbesondere umfassend mehrere Glieder bzw. Segmente der Energieführungskette, von der Energieführungskette geführt ist, insbesondere innerhalb der Energieführungskette geführt ist. Weiterhin zeichnet sich die Erfindung dadurch aus, dass Detektor, Außenhülle und Zugseil so angeordnet sind, dass der Detektor zur Erkennung einer Relativbewegung zwischen Zugseil und Außenhülle vorgesehen und eingerichtet, wobei der Detektor insbesondere hierzu mit einem Seilende des Zugseils verbunden ist.

Ein Kerngedanke der Erfindung ist also darin zu sehen, dass das Zugseil mit zumindest einem Längsabschnitt nach dem an sich bekannten Bowdenzug-Prinzip bzw. in Art eines Seilzugs in einer eigens für das Zugseil vorgesehen, zusätzlichen Außenhülle geführt wird. Das Zugseil selbst wird dabei nicht unmittelbar durch die Energieführungskette geführt, sondern nur mittelbar durch die an oder in der Energieführungskette geführte Außenhülle.

Ein Bowdenzug besteht im Wesentlichen aus einem Innenseil (Seele, Zugseil, Innenzug) oder), das in einer flexiblen, aber in Zugrichtung hinreichend druckfesten Außenhülle (auch Bowdenzughülle oder Zughülle) verlegt wird. Die Außenhülle dient der Führung des Innenseils sowie als Gegenlager zur Abstützung in Bezug auf zu übertragende Zugkräfte. Der Bowdenzug kann dadurch auf einfache Weise Zugkräfte entlang einer beliebig gekrümmten Bahn übertragen (solange ein gewisser Radius nicht unterschritten wird). Dieses Prinzip wurde erfindungsgemäß als besonders vorteilhaft zur Nutzung eines Detektors mit kraftübertragendem Zugseil in unterschiedlichsten Energieführungsketten erkannt, insbesondere auch in Energieführungsketten für Gelenkarmroboter mit räumlich gegeneinander auslenkbaren Gliedern.

Die erfindungsgemäß relativ einfache Maßnahme einer zusätzlichen Außenhülle bzw. Zughülle für das Zugseil, in Anlehnung an das Bowdenzug-Prinzip, bietet mehrere erhebliche Vorteile. Zunächst kann das Zugseil mit Außenhülle grundsätzlich an beliebiger Stelle des Aufnahmeraums, analog zur den zu führenden Leitungen und mit diesen, in der Energieführungskette verlegt werden, eine Anordnung auf einer neutralen Faser (welche bei räumlich auslenkbaren Gliedern typisch nicht vorliegt) ist nicht erforderlich, da das Zugseil durch die Außenhülle bzw. Zughülle bereits hinreichend geführt wird. Weiterhin kann dank der Außenhülle eine leichter einstellbare Vorspannung auf das Zugseil eingestellt werden, die grundsätzlich nicht von der Kettenlänge, sondern lediglich von der genutzten Seilzuglänge abhängt. Hierdurch lässt sich auch die Sensorik erheblich vereinfachen. Es ist keine anwendungsabhängige Wegmessung und Wegauswertung, insbesondere hinsichtlich im Betrieb auftretender Auslenkungen des Zugseils, erforderlich ist. Dank der Außenhülle bzw. Zugseil-Hülle wird zudem in vereinfachter Weise ermöglicht nur einen bestimmten Längsabschnitt der Energieführungskette zu überwachen. Auch eine Verlegung über die bzw. Überwachung der Gesamtlänge der Energieführungskette ist möglich und wird vereinfacht. Die Detektoranordnung mit Außenhülle bzw. Zughülle für das Zugseil ist zudem robuster gegen externe Störeinflüsse, z.B. durch Bewegungen der Leitungen innerhalb der Energieführungskette.

Das Zugseil ist dauerhaft flexibel, insbesondere biegeschlaff. Das Zugseil ist insbesondere dehnungsarm, insbesondere mit einer Dehnung (technische Dehnung) bei nominaler Arbeitslast, d.h. bei einer nominalen Zuglast entsprechend dem Normalbetrieb (nicht bei Bruch), <3%, vorzugsweise <1%, bezogen auf die Ursprungslänge. Vorzugsweise bleibt die Dehnung in Längsrichtung auch bei doppelter Arbeitslast noch im linearen Elastizitätsbereich. Als Zugseil kann z.B. ein dehnungsarmes Kunststoff-Seil, z.B. aus Dyneema^{®}-Fasern, genutzt werden oder auch ein Drahtseil bzw. ein Drahtlitze, insbesondere ein Stahldrahtseil.

Der Begriff "Zugseil" ist vorwiegend im weitesten Sinne zu verstehen und umfasst auch z.B. nicht verseilte Litzen, Schnüre oder dgl. die zur bestimmungsgemäßen Zugkraftübertragung hinreichend dehnungsarm sind, z.B. mit technischer Dehnung <1% bei nominaler Arbeitslast (z.B. nominale Vorspannung des Zugseils durch eine Zugfeder gegen die Zughülle bzw. Außenhülle).

In vorteilhafter Ausführungsform weist die Anordnung zumindest eine Zugfeder auf, mit welcher das Zugseil in Zugkraftrichtung mit einer Vorspannung vorgespannt ist, insbesondere gegen die die Außenhülle vorgespannt ist.

Die Außenhülle bzw. Zugseil-Hülle ist bevorzugt separat und getrennt vom Zugseil in Zugrichtung bzw. in Längsrichtung festgelegt, z.B. ortsfest an einer Anschlussstelle außerhalb der Energieführungskette oder an einem der Kettenglieder der Energieführungskette.

Bevorzugt wird als Außenhülle eine Bowdenzughülle verwendet. Deren Innendurchmesser ist vorzugsweise zwecks Spiel grösser, insbesondere um mindestens 1mm grösser ist, als der Außendurchmesser des Innenseils bzw. Innenzugs. Besonders bevorzugt wird eine schmierfreie bzw. wartungsfreie Bowdenzughülle mit geeigneter Kunststoffinnenbeschichtung, z.B. aus Teflon.

Bevorzugt kann vorgesehen sein, dass die Anordnung endseitig an der Außenhülle ein Betätigungsteil aufweist, welches relativ zur druckfesten Außenhülle in Kettenlängsrichtung verschieblich ist. An dem Betätigungsteil kann das vom Detektor abgewandte andere Seilende des Zugseils zugfest festgelegt werden, sodass dieses Ende des Zugseils nicht in die Außenhülle eingezogen werden kann. Hierzu sind an sich bekannte Mittel z.B. eine Festlegung mittels Klemmnippel oder Pressnippel ausreichend.

Ein einer einfach zu realisierenden Ausführungsform ist das Betätigungsteil in Art einer Endhülse ausgeführt ist, welche mit Spiel auf die Außenhülle aufsteckbar ist und das Zugseil in Zugrichtung hält, z.B. entsprechend einem Endstück einer Bowdenzug-Anordnung.

Es kann vorgesehen sein, dass die Außenhülle an einem ersten Befestigungspunkt in Kettenlängsrichtung festgelegt ist, insbesondere an einem Kettenglied in oder an der Energieführungskette oder an einer der Anschlussstellen außerhalb der Energieführungskette.

Dabei kann das Betätigungsteil an einem zweiten Befestigungspunkt in Kettenlängsrichtung festgelegt sein, insbesondere an einem Kettenglied in oder an der Energieführungskette oder an der anderen Anschlussstelle außerhalb der Energieführungskette Die voneinander entfernten Befestigungspunkte für Außenhülle und Zugseilende bzw. Betätigungsteil sind dabei insbesondere so gewählt, dass der zu überwachende Längsabschnitt der Energieführungskette in Kettenlängsrichtung zwischen beiden Befestigungspunkten liegt.

Bevorzugt kann vorgesehen sein, dass der Detektor ein Detektorgehäuse aufweist, an welchem vorzugsweise ein Ende der Außenhülle angebracht ist, sodass das Detektorgehäuse ein Auflager zur Druckkraftaufnahme für dieses Ende der Außenhülle bildet.

Insbesondere hierbei kann vorteilhaft weiterhin vorgesehen sein, dass im Detektorgehäuse ein mit dem einen Seilende des Zugseils verbundenes Indikatorelement verschieblich, insbesondere mittels einer Linearführung, gelagert ist. Weiter kann das Detektorgehäuse eine Stellvorrichtung aufweisen, insbesondere mit Stellschraube, zur axialen Verschiebung der Außenhülle, insbesondere zwecks Einstellung einer Vorspannung gegen die Außenhülle, welche durch eine vorteilhaft mit dem Zugseil verbundene Zugfeder bzw. Spannfeder erzeugt wird. Es kann weiterhin eine Zugfeder am oder im Detektorgehäuse angeordnet sein. Hierbei kann die Zugfeder an dem Seilende des Zugseils, welches mit dem Detektor verbunden ist, und/oder an dem Indikatorelement angreifen.

In einer besonders einfachen Ausführungsform des Detektors kann vorgesehen sein, dass der Detektor ein mit dem einen Seilende des Zugseils verbundenes Indikatorelement aufweist, welches verschieblich gelagert ist, sowie mindestens einen Näherungsschalter, insbesondere einen induktiven und/oder kapazitiven Näherungsschalter, welcher mit dem Indikatorelement zusammenwirkt um ein Signal zu erzeugen, welches von der Position des Indikatorelements abhängig ist bzw. für diese Position indikativ ist. Handelsübliche Näherungsschalter, insbesondere induktive und/oder kapazitiven Näherungsschalter, sind sehr preiswert im Vergleich zu Wegsensoren und können dank des Seilzugprinzips, insbesondere in Verbindung mit einer FederVorspannung, eine hinreichend genaue Erkennung bzw. Diskriminierung eines Bruchs ermöglichen, ohne dass eine genaue Positionsauswertung des Zugseilendes erforderlich ist. Es muss lediglich eine geeignete Gestaltung des Indikatorelements mit hinreichender Toleranz gegen Fehlauslösung, z.B. durch ein Langloch in Zugrichtung im Indikatorelement vorgesehen werden. Das Indikatorelement wird dabei durch das Zugseil in Zugrichtung verschoben, wenn ein Bruch in der Kette auftritt, durch welchen ein aufgebrochenes Kettenende eine Querlast auf die Außenhülle bewirkt.

Als günstige erweisen sich insbesondere Ausführungsformen bei welchen die Länge der Außenhülle ein Vielfaches der Kettenteilung und/oder zumindest 10% der Kettenlänge, insbesondere zumindest 25% der Kettenlänge beträgt; und/oder die Außenhülle zumindest mit einem überwiegenden Anteil ihrer Länge entlang der Energieführungskette, insbesondere innerhalb der Energieführungskette verläuft; und/oder das Zugseil eine größere Länge hat als die Außenhülle und/oder mit einem überwiegenden Anteil seiner Länge in der Außenhülle aufgenommen und geführt ist.

Die Außenhülle kann als langestreckte, insbesondere Zugseil-Außenhülle (Zughülle), insbesondere für einen Bowdenzug, ausgeführt sein. Versuche zeigten, dass eine für typische Zugkräfte im Sinne eines Seilzugs zugfeste Außenhülle nicht zwingend nötig ist, auch eine andere schlauchartige Hülle, mit geringerer Zugfestigkeit, kann ausreichend sein, z.B. ein Kunststoff-Gewebeschlauch oder dgl. In diesem Sinne muss die Außenhülle lediglich gegenüber der gewünschten Vorspannung hinreichend steif gegen Zugkräfte sein um eine ungewollte Stauchung in Längsrichtung zu vermeiden. Die Außenhülle ist vorzugsweise durchgehend, insbesondere umfänglich und längs geschlossen durchgehend über ihre Längserstreckung. Die Außenhülle ist eine biegeflexible röhrenförmige Zugseil-Hülle d.h. bildet einen Hohlraum bzw. ein Lumen, in welchem zumindest ein Längsabschnitt des Zugseils, insbesondere längsverschieblich, geführt ist.

Die Außenhülle kann ggf. auch, wie bei Bowdenzügen typisch, eine röhrenförmige Flachdrahtspirale oder Runddrahtspirale umfassen, vorzugweise mit innerem Auskleidungsrohr aus Kunststoff, zur Vermeidung von überhöhter Reibung des Zugseils, und/oder mit äußerem Mantel aus Kunststoff, insbesondere zum Schutz der in der Energieführungskette geführten Leitungen.

Die Außenhülle hat vorzugweise einen kleinen Außendurchmesser, bevorzugt ≤ 10mm, insbesondere ≤ 7mm aufweist, sodass sie im Aufnahmeraum bzw. Inneren der Energieführungskette möglichst wenig für Leitungen nutzbaren Platz einnimmt. Entsprechend wird auch ein relativ dünnes Zugseil bevorzugt. Das Zugseil ist, insbesondere als Kunststoff-Seil oder Stahldrahtseil, dehnungsarm ausgeführt und kann vorzugsweise mit einem Durchmesser ≤ 3mm, insbesondere mit einem Durchmesser ≤ 2mm gewählt sein. Für Außenhülle und Zugseil kann geeignete handelsübliche Meterware zum Einsatz kommen.

Hinsicht der Anbringung der wesentlichen Bestandteile der Detektor-Anordnung, d.h. von Detektor, Außenhülle und Zugseil ist bevorzugt vorgesehen, dass der Detektor an einer Anschlussstelle, insbesondere einer stationären Anschlussstelle, der Energieführungskette befestigt ist und dass die Außenhülle ein gegenüber dem Detektor ortsfestes Ende aufweist, insbesondere ein am Detektor bzw. an einem zum Detektor ortsfesten Befestigungspunkt festgelegtes Ende, aus welchem das eine Seilende des Zugseils herausgeführt ist, welche mit dem Detektor verbunden ist.

Die Die erfindungsgemäße Bauweise ermöglicht, dass die Außenhülle mit dem darin geführten Zugseil zumindest abschnittsweise lose in der Energieführungskette verlegt sind. Dies erlaubt eine erhebliche Vereinfachung in der Herstellung der Energieführungskette bzw. Montage der Detektoranordnung an der Energieführungskette.

Die erfindungsgemäße Gestaltung der Detektoranordnung eignet sich insbesondere für sog. Roboterketten (Energieführungsketten für Gelenkarmroboter) d.h. Energieführungsketten mit räumlich gegeneinander auslenkbaren Gliedern. Die Bauweise der Energieführungskette kann dabei z.B. derjenigen WO 2004/093279 A1 oder derjenigen aus EP1492967B1 entsprechen. Hierbei hat die Energieführungskette typisch Glieder die zumindest in zwei Richtungen, insbesondere räumlich bzw. kugelgelenkartig, gegeneinander abwinkelbar sind. Meist sind dabei Gelenkverbindungen zwischen je zwei miteinander gelenkig verbundenen Gliedern vorgesehen, wobei die Glieder jeweils miteinander korrespondierende Gelenkelemente, vorzugsweise einen Gelenkkörper, insbesondere in Art einer Gelenkkugel, und eine Gelenkkörperaufnahme, insbesondere in Art einer Kugelpfanne aufweisen. Dabei hat jedes Glied einen stirnseitig offenen Aufnahmeraum der insbesondere mittels radial außenseitiger kreisbogenförmiger Führungselemente begrenzt ist, ggf. geschlossen umgeben mit aufklappbaren Führungselementen oder mit einer Einführöffnung die durch biegsame Führungselemente begrenzt ist, um Leitungen seitlich einzulegen. Die Glieder bilden typisch in Kettenlängsrichtung zumindest einen Führungskanal. Die erfindungsgemäße Außenhülle mit dem darin verlaufenden Längsabschnitt des Zugseils kann in dem von den Gliedern gebildeten Führungskanal angeordnet werden, entsprechend den zu führenden Leitungen. Die erfindungsgemäße Bauweise ist dank der Außenhülle mit beliebigen auch räumlich freien Verläufen der Energieführungskette kompatibel.

Die erfindungsgemäße Gestaltung der Detektoranordnung eignet sich ebenfalls für konventionelle Energieführungsketten, wie z.B. in der WO 2015/118143 A1 gezeigt, auf welche zur Verkürzung verwiesen sei. Hierbei ist die Energieführungskette typisch in einer Verfahrebene, z.B. einer vertikalen Ebene, unter Bildung eines ersten Trums, eines zweiten Trums und eines die Trume verbindenden Umlenkbogens verfahrbar. Solche Energieführungsketten haben die in Kettenlängsrichtung hintereinander angeordnet und zueinander jeweils um eine zur Verfahrebene im Wesentlichen senkrechte, vorgebebene Schwenkachse zur Bildung des Umlenkbogens gegeneinander abwinkelbar sind. Die Gelenkverbindung kann z.B. als Bolzen-Aufnahme Drehgelenkverbindung realisiert sein, wobei die Schwenkachsen jeweils senkrecht zur Verfahr-Ebene liegen und zueinander parallel sind.

Typisch ist das erste Trum mit einem relativbeweglichen Mitnehmer und das zweite Trum mit einer stationären Anschlussstelle verbunden ist.

Bei solchen konventionellen Energieführungsketten kann insbesondere vorgesehen sein, dass die Außenhülle mit dem darin verlaufenden Längsabschnitt des Zugseils in einem vorzugsweise mitnehmerseitigen Längsabschnitt der Energieführungskette angeordnet ist, wobei ein betätigbares Ende des Zugseils bzw. das Betätigungsteil des Zugseils insbesondere an einem Kettenglied innerhalb der Energieführungskette befestigt bzw. in Kettenlängsrichtung festgelegt werden kann. Die Erfindung ist gleichermaßen bei Ketten mit freitragendem Obertrum und bei gleitenden Ketten, wie in WO 2015/118143 A1 gezeigt, anwendbar, d.h. bei Ketten bei welchen das erste Trum vorzugsweise auf dem zweiten Trum abgleiten oder abrollen kann. Im Falle einer konventionellen Energieführungskette kann vorgesehen sein, dass der mitnehmerseitige Längsabschnitt der Energieführungskette von einem endseitigen Kettenglied am Mitnehmer ausgeht und/oder vorzugsweise mindestens 10% der Kettenlänge, insbesondere mindestens 25% der Kettenlänge, umfasst.

Die Erfindung betrifft auch eine erfindungsgemäße Anordnung zur Überwachung der Energieführungskette für sich genommen mit ihren wesentlichen Bestandteilen (ohne die Energieführungskette). Diese umfassen einen Detektor, ein Zugseil, welches mit einem Seilende mit dem Detektor verbunden ist und mechanisch mit dem Detektor zusammenwirkt, insbesondere zur Erfassung eines Bruchs in einer zu überwachenden Energieführungskette, und ferner erfindungsgemäß eine biege-flexible, insbesondere in einer Zugrichtung drucksteife, Außenhülle bzw. Zugseil-Hülle, in welcher zumindest ein Längsabschnitt des Zugseils geführt ist. Der Detektor kann dabei in besonders einfacher Weise zur Erkennung einer Relativbewegung zwischen Zugseil und Außenhülle eingerichtet sein. z.B. mit lediglich einem handelsüblichen Näherungsschalter, wie z.B. einem induktiven Näherungsschalter der anspricht bei vordefinierter Auslenkung des Zugseils relativ zur Außenhülle, insbesondere in Zugrichtung.

Die Detektor-Anordnung zur Überwachung der Energieführungskette für sich genommen kann dabei vorteilhaft jede geeignete Kombination der Merkmale einer oder mehrerer der vorstehend erörterten Ausführungsformen aufweisen.

Die Erfindung betrifft auch die Verwendung an einem Roboter, insbesondere einem industriellen Gelenkarmroboter, und einen solchen (Gelenkarm-)Roboter umfassend eine Energieführungskette mit Detektor-Anordnung wie hierin vorgeschlagen bzw. vorstehend beschrieben, insbesondere mit einer räumlich auslenkbaren Energieführungskette.

Hierbei kann der Gelenkarmroboter typisch einen Roboterarm mit einer Roboterhand aufweisen. Dabei sieht eine günstige Anordnung zur möglichst vollständigen Überwachung der Energieführungskette vor, dass ein Ende der Energieführungskette an einer ersten Anschlussstelle an der Roboterhand festgelegt ist, wobei das vom Detektor abgewandte Seilende des Zugseils ortsfest zur ersten Anschlussstelle an der Roboterhand festgelegt ist und dass das andere Ende der Energieführungskette an einer zweiten Anschlussstelle am Roboterarm festgelegt ist, wobei der Detektor und die Außenhülle ortsfest zur zweiten Anschlussstelle am Roboterarm befestigt sind. Die Anschlussstellen sind dabei insbesondere so gewählt, dass das Zugseil mit Außenhülle über nahezu die gesamte oder die gesamte Länge der Energieführungskette durch diese verläuft.

Die Erfindung betrifft ferner auch ein Überwachungssystem zum Schutz einer Energieführungskette gegen einen Leitungsabriss, umfassend eine Auswertungseinheit, wobei das System sich auszeichnet durch eine Energieführungskette bzw. Detektor-Anordnung gemäß einer der hierin beschriebenen Ausführungsformen. Hierbei kann insbesondere der mit dem Zugseil verbundene Detektor signaltechnisch an die Auswertungseinheit angeschlossen werden, wobei die Auswertungseinheit eingerichtet ist um durch den Detektor erfasste Signale hinsichtlich eines möglichen Bruchs in der Energieführungskette auszuwerten und/oder wobei die Auswertungseinheit im Falle eines erkannten Bruchs vorzugsweise ein Nothaltsignal und/oder ein Wartungssignal ausgibt.

Weitere Einzelheiten, Vorteile und Merkmale der Erfindung lassen sich der nachfolgenden Beschreibung eines Ausführungsbeispiels anhand der beigefügten Zeichnungen entnehmen. Dabei zeigen:

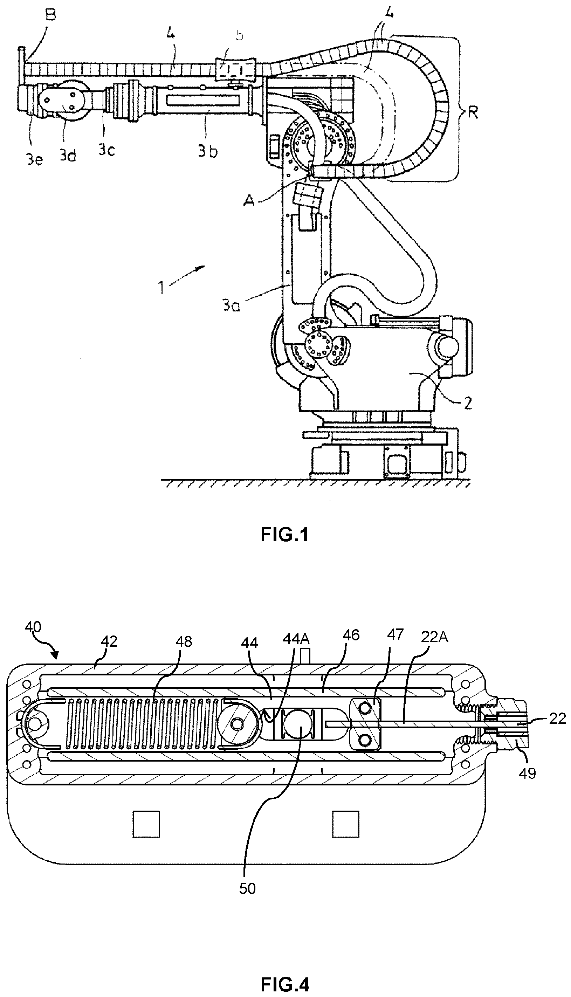

- FIG.1: eine schematische Darstellung eines Gelenkarmroboters, aus welcher der Verlauf bzw. die Anordnung der Führung der Leitungen (Schläuche und/oder Kabel) in einer Energieführungskette zur Versorgung einer nicht dargestellten Anwendungsinstallation an der Roboterhand ersichtlich ist;

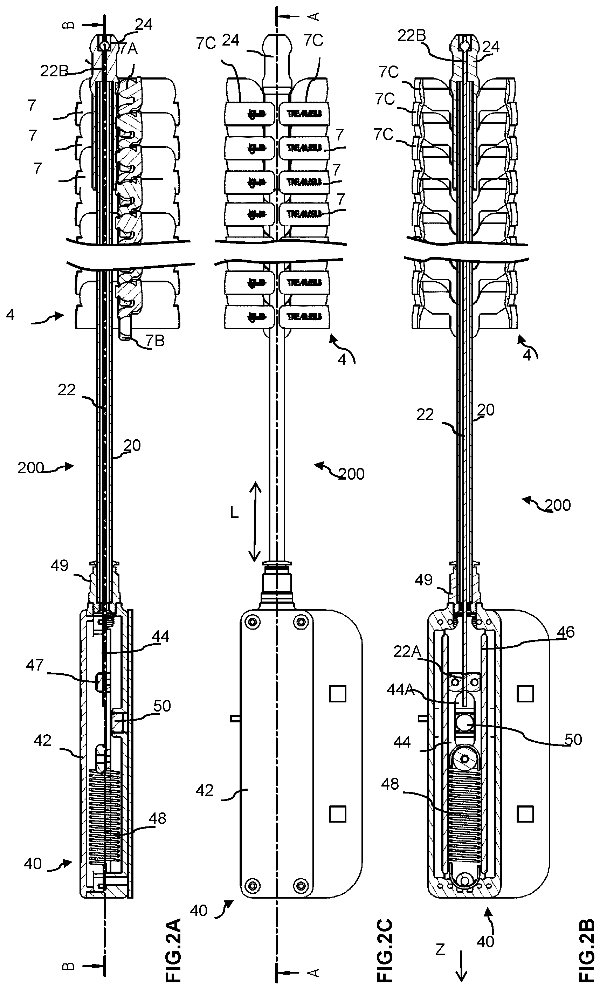

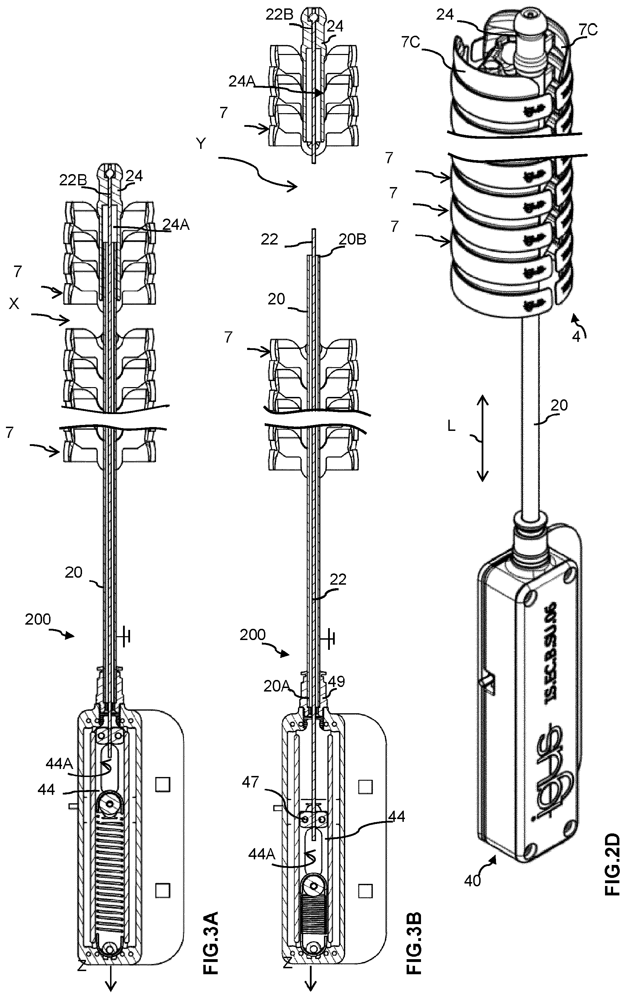

- FIG.2A-2D:: ein erfindungsgemäßes Überwachungssystem sowie eine Energieführungskette erfindungsgemäßer mit Detektor-Anordnung im vertikalen Längsschnitt (FIG.2A, gemäß Schnittlinie A-A aus FIG.2C), in Draufsicht (FIG.2C), im horizontalen Längsschnitt (FIG.2B, gemäß Schnittlinie B-B aus FIG.2C), und in Perspektivansicht (FIG.2D) jeweils im funktionstüchtigen Zustand der Energieführungskette, welche jeweils nur teilweise gezeigt ist;
- FIG.3A-3B:: eine schematische Darstellung der Energieführungskette und des Detektors bei einem Bruch in der Energieführungskette (FIG.3A) oder bei einem Abriss der der Energieführungskette und des Zugseils der Detektor-Anordnung (FIG.3B), jeweils in Schnittansichten entsprechend FIG.2B; und
- FIG.4:: einen vergrößerten horizontalen Längsschnitt (gemäß Schnittlinie B-B aus FIG.2A) durch ein erfindungsgemäßes Ausführungsbeispiel des Detektors als solchen (in der nominalen Ruhelage bei funktionstüchtiger unbeschädigter Energieführungskette) mit welchem erfindungsgemäßes ein in einer Außenhülle geführtes Zugseil zusammenwirkt.

Der in FIG.1 beispielhaft dargestellte Knickarmroboter bzw. Gelenkarmroboter 1 besitzt eine Basis 2 mit an der Basis befestigten Schwenkarmabschnitten 3a, 3b, 3c, 3d, 3e, wobei die Kabel und Schläuche für einen nicht dargestellte Anwendung bzw., einen nicht gezeigten Endeffektor, z.B. ein Greifer, eine Schweißzange oder dergleichen, entlang der Schwenkarmabschnitte 3a, 3b, 3c, 3d, 3e von einem unteren Anschlusspunkt A zu einem oberen Anschlusspunkt B, in einer Energieführungskette 4 zur Roboterhand mit dem Endeffektor (nicht gezeigt) geführt sind. Ungeachtet des Robotertyps ist die Energieführungskette 4 dabei zumindest in bestimmten Abschnitten räumlich auslenkbar bzw. mit zumindest drei Freiheitsgraden bewegbar, sodass die Energieführungskette 4 den Bewegungen der Gelenke des Gelenkarmroboters 1 folgen kann.

Die Energieführungskette 4 ist in FIG.1 z.B. an dem oberen Anschlusspunkt B ortsfest angebracht und z.B. um ihre Längsachse drehbar angeschlagen und wird an dem Schwenkarm 3b von einer Buchse 5 längsverschieblich gehalten. Die Energieführungskette 4 ist ebenfalls am Anschlusspunkt A festgelegt und verläuft bis zu dem oberen Anschlusspunkt B.

Eine für einen Gelenkarmroboter 1 besonders geeignete Energieführungskette 4 ist an sich bekannt und z.B. in WO 2004/093279 A1 beschrieben, auf welche zur Verkürzung verwiesen sei bzw. deren Lehre insoweit hier durch Verweis einbezogen wird. Auch andere Energieführungsketten, z.B. in einer Ebene verfahrbare konventionelle Energieführungsketten bzw. Schleppketten, können im Rahmen der Erfindung vorteilhaft mit der vorgeschlagenen Detektor-Anordnung ausgerüstet werden. Ein Ausführungsbeispiel der Detektor-Anordnung ist in FIG.2-4 veranschaulicht und sei im Folgenden näher beschrieben.

In FIG.2A-2D ist ein Teilabschnitt einer räumlich auslenkbaren Energieführungskette 4 nach dem Prinzip aus WO 2004/093279 A1 näher gezeigt. Die einzelnen Kettenglieder 7 haben einen mittleren bzw. zentralen Kern mit Kugelgelenkkopf 7A und korrespondierender Kugelgelenkaufnahme 7B zur räumlich auslenkbaren und in Längsrichtung L zugfesten gelenkigen Verbindung der Kettenglieder 7, hier z.B. in Art einer Kugelgelenkverbindung. Die Kettenglieder 7 bilden je einen stirnseitig offenen Aufnahmeraum, der mittels radial außenseitiger kreisbogenförmiger Führungselemente 7C begrenzt ist, sodass die Kettenglieder 7 in Kettenlängsrichtung zumindest einen Führungskanal für Leitungen (nicht gezeigt) für die gewünschte Anwendung, wie z.B. in FIG.1, bilden. Die Führungselemente 7C sind über jeweils einen Steg mit dem zentralen Kern, hier einteilig verbunden.

Eine erfindungsgemäße Detektor-Anordnung 200, vgl. FIG.2A-2C, hat eine flexible, in einer Zugrichtung drucksteife Außenhülle 20, in welcher ein überwiegender Teil der Länge eines Zugseils 22 geführt ist. Die Außenhülle 20 mit darin verschieblich geführtem Längsabschnitt des Zugseils 22 sind entlang eines zu überwachenden Längsabschnitts C, z.B. von dem unteren Anschlusspunkt A bis zum oberen Anschlusspunkt B in FIG.1, geführt. Der Längsabschnitt C umfasst die Mehrzahl oder vorzugsweise alle Kettenglieder 7 bzw. Segmente der Energieführungskette 4. In FIG.2A-2D ist die Anordnung mit Außenhülle 20 und Zugseil 22 in Art eines Bowdenzugs angeordnet und wird innerhalb der der Energieführungskette 4 geführt. Je nach der Energieführungskette, kommt auch eine Führung seitlich außen an der Energieführungskette, z.B. an speziellen Haltern in Betracht, wie z.B. in WO 2016/146706 A1 vorgeschlagen.

FIG.4 zeigt eine bevorzugte Bauweise eines Detektors 40, welcher zusammen mit Außenhülle 20 und Zugseil 22 einen weiteren Bestandteil der Detektor-Anordnung 200 darstellt. Der Detektor 40 ist zur Erkennung einer Relativbewegung von Zugseil 22 relativ zur Außenhülle 20 vorgesehen und hierzu eingerichtet.

Der Detektor 40 hat ein Detektorgehäuse 42, z.B. aus zwei Spritzgussschalen, in welchem ein längliches, plattenförmiges Indikatorelement 44 durch eine Linearführung 46 längsverschieblich in Längsrichtung bzw. in und gegen die Zugrichtung Z geführt ist. Das Indikatorelement 44 ist an einem Endbereich mit dem einen ersten Seilende 22A des Zugseils 22 verbunden, z.B. mittels einer Klemmplatte 47 oder dergleichen. Am anderen Endbereich ist das Indikatorelement 44 mit einer Zugfeder 48 z.B. einer Spiralfeder verbunden, die im Detektorgehäuse 42 aufgenommen ist und auf das Seilende 22A des Zugseils 2 über das Indikatorelement 44 eine vorbestimmte Vorspannung in Zugrichtung Z ausübt. Das Detektorgehäuse 42 hat eine Grundplatte mit Befestigungslasche, zum Befestigen z.B. am Roboterarm, z.B. nahe dem unteren Anschlusspunkt A wie in FIG.1.

Am Detektorgehäuse 42 ist auch ein entsprechend erstes Ende 20A der Außenhülle 20 angebracht, wobei das Detektorgehäuse 42 ein Auflager zur Druckkraftaufnahme für dieses Ende der Außenhülle 20 bildet.

Zur Einstellung der Vorspannung der Außenhülle 20 und/oder des Zugseils 22 hat das Detektorgehäuse 42 des Detektors 40 eine Stellvorrichtung. Diese hat hier z.B. eine Stellschraube 49 die in Art eines Endstücks mit Gewinde für Seilzüge bzw. Bowdenzüge ausgeführt ist und in einem Gewinde koaxial zur Längsrichtung am Detektorgehäuse 42 relativ zu diesem verstellbar ist. Die Stellschraube 49 erlaubt eine axiale Verschiebung des ersten Endes 20A der Außenhülle 20 und dadurch eine Einstellung der Vorspannung auf die Außenhülle 20.

Die Detektor-Anordnung 200 hat weiterhin endseitig an der Außenhülle ein Betätigungsteil 24, welches relativ zur druckfesten Außenhülle 20 in Kettenlängsrichtung L verschieblich ist und an welchem ein zweites, vom Detektor abgewandte Seilende 22B des Zugseils durchgeführt und z.B. mittels Pressnippel oder dgl. zugfest angebracht ist und gegen Lösung in Zugrichtung Z gehalten. Das Betätigungsteil 24 ist als hohle Endhülse ausgeführt, welche mittels einer Aufnahme 24A mit Spiel auf das zweite äußere Ende 20B der Außenhülle 20 aufsteckbar ist und gegenüber dieser in Längsrichtung L verschieblich ist. Das Betätigungsteil 24 ist an einem Kettenglied 7 oder einem Befestigungspunkt außerhalb der Energieführungskette 4 angebracht. Das Betätigungsteil 24 ist am Befestigungspunkt z.B. befestigt bzw. zumindest in Längsrichtung unbeweglich, insbesondere gegen Kraft in Zugrichtung Z, gehalten, z.B. am oberen Anschlusspunkt B (FIG.1) des Gelenkarmroboters 1. Andererseits ist ein Endbereich der Außenhülle 20, nahe deren erstem Ende 20A, ebenfalls befestigt, z.B. an dem oder nahe dem unteren Anschlusspunkt A (FIG.1) des Gelenkarmroboters 1, oder mit dem Detektorgehäuse ortsfest, z.B. am Gelenkarmroboter 1 oder einem dort festgelegten Kettenglied 7, befestigt.

Der Detektor 40 hat zur Zusammenwirkung mit dem vom ersten Seilende 22A des Zugseils 22 in Längsrichtung L betätigten und dadurch verstellbaren Indikatorelement 44 ein Sensorelement. Im hier gezeigten Beispiel ist genau ein Näherungsschalter 50 als (hier einziges) Sensorelement vorgesehen, z.B. ein preiswerter induktiver Näherungsschalter. Für diese Zusammenwirkung weist das Indikatorelement 44 ein Langloch 44A auf, sodass der Näherungsschalter 50 nur dann ein Erkennungssignal erzeugt, wenn ein vorbestimmter Ausschlag bzw. eine vorbestimmte Auslenkung des Zugseils 22 durch Relativbewegung von Zugseil 22 und Außenhülle 20 entsteht.

Zwei beispielhafte vom Detektor 40 erfassbare Fehlerfälle sind schematisch in FIG.3A und FIG.3B veranschaulicht. Im Falle eines Bruchs der Energieführungskette 4, wie schematisiert bei X in FIG.3A gezeigt, bewirkt eine Querlast eines Teils der Kettenglieder 7 auf Außenhülle 20 (Lastwirkung nicht dargestellt) ein Herausziehen des zweiten Endes 20B der Außenhülle 20 aus dem Betätigungsteil 24 des Zugseils 22. Dadurch wird das Indikatorelement 44 in die in FIG.3A gezeigte Stellung bewegt, voll gegen Zugrichtung Z ausgezogen, sodass sich das Langloch 44A nicht mehr über dem Näherungsschalter 50 befindet und dieser ein Signal auslöst, das einen Bruch der Energieführungskette 4 anzeigt. Im Falle eines vollständigen Abrisses der Energieführungskette 4 und/oder der Außenhülle 20 mit Zugseil 22, dessen Riss ebenfalls einen möglichen Fehlerfall wegen Detektorausfalls darstellt, schematisiert bei Y in FIG.3B gezeigt, bewirkt die Federbelastung durch die Zugfeder 48 ein Einziehen des ersten Endes des Zugseils 22A bzw. des Indikatorelements 44 in die in FIG.3B gezeigte Stellung, ganz in Zugrichtung Z eingezogen. Auch in diesem Fall liegt das Langloch 44A nicht mehr über dem Näherungsschalter 50 und dieser löst somit ein Signal, z.B. zu Wartungszwecken aus.

Die Bauweise des Detektors 40 wird durch die Nutzung einer Außenhülle 20 in der oben beschriebenen Weise erheblich vereinfacht. Eine konstruktiv sehr einfache und preiswerte Überwachung an räumlich auslenkbaren Energieführungskette 4 für Roboter wird hiermit ermöglicht.

Das Zugseil 22 bzw. der Zug und die Außenhülle 20 betätigen nach Art eines Bowdenzugs den Detektor, wobei jedoch kein eigentlicher Aktuator am Zugseil 22 vorgesehen ist, sondern eine Last auf der Außenhülle 20 bzw. ein Bruch messbar werden soll. Das Zugseil 22 hat dazu eine größere Länge als die Außenhülle 20 und/oder ist mit einem überwiegenden Anteil seiner Länge in der Außenhülle 20 aufgenommen und geführt.

Bevorzugt beträgt die Länge der Außenhülle 20 ein Vielfaches der Kettenteilung bzw. Längsabmessung der Kettenglieder 7 und/oder zumindest 10%, insbesondere zumindest 25% der Kettenlänge der Energieführungskette 4. Für eine zuverlässige Erkennung und/oder einfache Montage ist die Außenhülle 20 zumindest mit einem überwiegenden Anteil ihrer Länge innerhalb der Energieführungskette 4 geführt. Dabei kann die Außenhülle 20 mit dem darin geführten Zugseil 22 zumindest abschnittsweise lose in der Energieführungskette verlegt sein.

Jede geeignet Außenhülle 20 kann verwendet werden, insbesondere eine Zugseil-Außenhülle für einen Bowdenzug, die röhrenförmig einen Hohlraum bildet, in welchem zumindest ein Längsabschnitt des Zugseils 22 geführt wird. Die Außenhülle 20 kann dazu als tragendes Element eine röhrenförmige und/oder durchgehende Flachdrahtspirale oder Runddrahtspirale umfassen. Die Außenhülle 20 hat vorzugweise einen Außendurchmesser ≤ 10mm, insbesondere ≤ 7mm. Das Zugseil kann als Kunststoff-Seil oder Stahldrahtseil, ausgeführt sein und ist möglichst dehnungsarm gewählt, vorzugsweise mit einem Durchmesser ≤ 2mm.

Die Erfindung ist besonders vorteilhaft für räumlich auslenkbare Energieführungsketten, aber ebenfalls auf konventionelle Energieführungsketten anwendbar die in einer Ebene verfahren wie z.B. in WO 2015/118143 A1. Somit kann z.B. ein Austausch einer bekannten Vorrichtung, z.B. einer Vorrichtung wie in FIG.1A-1B der WO 2015/118143 A1 gezeigt, mittels einer mitnehmerseitigen Anordnung gemäß FIG.2A-2D erfolgen. Die hier vorgeschlagene Anordnung zur Überwachung der Energieführungskette erlaubt nebst günstiger Bauweise auch eine zuverlässige Erkennung von Fehlerfällen.

Wie weiterhin in WO 2015/118143 A1 (dort zu FIG.1A-1B ) beschrieben kann der mit dem Zugseil verbundene Detektor signaltechnisch an eine geeignet Auswertungseinheit (hier nicht gezeigt) angeschlossen werden, welche eingerichtet ist, um durch den Detektor erfasste Signale hinsichtlich eines möglichen Bruchs in der Energieführungskette 4 auszuwerten. Die Auswertungseinheit kann im Falle eines erkannten Bruchs vorzugsweise ein Nothaltsignal und/oder ein Wartungssignal ausgeben.

### Bezugszeichenliste

1 Roboter
2 Basis
3a,3b,3c,3d,3e Schwenkarmabschnitt
4 Energieführungskette
5 Buchse
7 Kettenglied
7A Kugelgelenkopf
7B Kugelgelenkaufnahme
7C Führungselement
20 Außenhülle
22 Zugseil
22A, 22B Seilende
24 Betätigungsteil
40 Detektor
42 Detektorgehäuse
44 Indikatorelement
44A Langloch
46 Linearführung
47 Klemmplatte
48 Zugfeder
49 Stellschraube
50 Näherungsschalter
200 Detektor-Anordnung
A, B Anschlusspunkt
C Längsabschnitt
L Kettenlängsrichtung
X Bruch (Energieführungskette)
Y Riss (Zugseil)
Z Zugrichtung

## Patentansprüche

1. Energieführungskette (4) zum Führen einer oder mehrerer Leitungen, wie Kabeln, Schläuchen oder dgl., zwischen zwei Anschlussstellen (A, B), von denen mindestens eine relativ zur anderen beweglich ist, umfassend
- eine Vielzahl in einer Kettenlängsrichtung miteinander verbundener Glieder (7) bzw. Segmente welche gegeneinander um mindestens eine Schwenkachse abwinkelbar sind, und
- eine Anordnung zur Überwachung der Energieführungskette, umfassend einen Detektor (40) und ein Zugseil (22), welches in Kettenlängsrichtung verläuft und mechanisch mit dem Detektor zusammenwirkt, insbesondere zur Erfassung eines Bruchs in der Energieführungskette, **dadurch gekennzeichnet,**
**dass** die Anordnung eine flexible, in einer Zugrichtung drucksteife Außenhülle (20) aufweist, in welcher zumindest ein Längsabschnitt des Zugseils (22) geführt ist,
**dass** die Außenhülle (20) mit dem darin verlaufenden Längsabschnitt des Zugseils (22) zumindest entlang eines zu überwachenden Längsabschnitts umfassend mehrere Glieder (7) bzw. Segmente der Energieführungskette (4) von der Energieführungskette (4) geführt ist, und
**dass** der Detektor (40) zur Erkennung einer Relativbewegung von Zugseil (22) relativ zur Außenhülle (20) vorgesehen und eingerichtet ist, insbesondere mit einem Seilende (22A) des Zugseils (22) verbunden ist.

2. Energieführungskette nach Anspruch 1, **dadurch gekennzeichnet, dass** die Anordnung eine Zugfeder (48) aufweist, mit welcher das Zugseil (22) in Zugkraftrichtung mit einer Vorspannung gegen die Außenhülle vorgespannt ist.

3. Energieführungskette nach Anspruch 1 oder 2, **dadurch gekennzeichnet, dass** die Anordnung endseitig an der Außenhülle (20) ein Betätigungsteil (24) aufweist, welches relativ zur druckfesten Außenhülle (20) in Kettenlängsrichtung verschieblich ist und an welchem das andere, vom Detektor abgewandte Seilende (22B) des Zugseils zugfest festgelegt ist,
insbesondere wobei die Außenhülle (20) an einem ersten Befestigungspunkt in Kettenlängsrichtung festgelegt ist, insbesondere an einem Kettenglied (7) in oder an der Energieführungskette (4) oder an einer der Anschlussstellen (A, B) außerhalb der Energieführungskette, und das Betätigungsteil (24) an einem zweiten Befestigungspunkt in Kettenlängsrichtung festgelegt ist, insbesondere an einem Kettenglied (7) in oder an der Energieführungskette (4) oder an der anderen Anschlussstelle (B, A) außerhalb der Energieführungskette, wobei die Befestigungspunkte so gewählt sind, dass der zu überwachende Längsabschnitt der Energieführungskette (4) in Kettenlängsrichtung zwischen beiden Befestigungspunkten liegt.

4. Energieführungskette nach einem der Ansprüche 1 bis 3, insbesondere nach Anspruch 2 und 3, **dadurch gekennzeichnet, dass** der Detektor (40) ein Detektorgehäuse (42) aufweist, an welchem vorzugsweise ein Ende der Außenhülle (20) angebracht ist, sodass das Detektorgehäuse (40) ein Auflager zur Druckkraftaufnahme für dieses Ende der Außenhülle bildet, wobei
- im Detektorgehäuse ein mit dem einen Seilende (22A) des Zugseils (22) verbundenes Indikatorelement (44) verschieblich, insbesondere mittels einer Linearführung, gelagert ist; und/oder
- das Detektorgehäuse (42) eine Stellvorrichtung, insbesondere Stellschraube, zur axialen Verschiebung der Außenhülle (20), insbesondere zwecks Einstellung einer Vorspannung der Außenhülle (20), aufweist;
und/oder
- die Zugfeder (48) am oder im Detektorgehäuse (42) angeordnet ist und an dem Seilende (22A) des Zugseils (22) und/oder an dem Indikatorelement (44) angreift.

5. Energieführungskette nach einem der vorstehenden Ansprüche 1 bis 4, **dadurch gekennzeichnet, dass** der Detektor ein mit dem einen Seilende (22A) des Zugseils verbundenes Indikatorelement (44) aufweist, welches verschieblich gelagert ist, sowie mindestens einen Näherungsschalter (50), insbesondere einen induktiven und/oder kapazitiven Näherungsschalter, welcher mit dem Indikatorelement (44) zusammenwirkt um ein von dessen Position abhängiges Signal zu erzeugen.

6. Energieführungskette nach einem der vorstehenden Ansprüche, **dadurch gekennzeichnet, dass** die
- die Länge der Außenhülle (20) ein Vielfaches der Kettenteilung und/oder zumindest 10% der Kettenlänge, insbesondere zumindest 25% der Kettenlänge der Energieführungskette beträgt; und/oder
- die Außenhülle (20) zumindest mit einem überwiegenden Anteil ihrer Länge entlang der Energieführungskette (4), insbesondere innerhalb der Energieführungskette verläuft; und/oder
- das Zugseil (22) eine größere Länge hat als die Außenhülle (20) und/oder mit einem überwiegenden Anteil seiner Länge in der Außenhülle (20) aufgenommen und geführt ist.

7. Energieführungskette nach einem der vorstehenden Ansprüche, **dadurch gekennzeichnet, dass** die Außenhülle (20) als langestreckte, insbesondere Zugseil-Außenhülle für einen Bowdenzug ausgeführt ist, die röhrenförmig einen Hohlraum bildet, in welchem zumindest ein Längsabschnitt des Zugseils geführt ist, wobei
- die Außenhülle (20) vorzugweise eine röhrenförmige und/oder durchgehende Flachdrahtspirale oder Runddrahtspirale umfasst;
- die Außenhülle (20) vorzugweise einen Außendurchmesser ≤ 10mm, insbesondere ≤ 7mm aufweist; und/oder
- das Zugseil (22), insbesondere als Kunststoff-Seil oder Stahldrahtseil, dehnungsarm ausgeführt ist vorzugsweise mit einem Durchmesser ≤ 3mm, mit einem Durchmesser ≤ 2mm.

8. Energieführungskette nach einem der vorstehenden Ansprüche, **dadurch gekennzeichnet**, insbesondere nach Anspruch 3, dass der Detektor (40) an einer Anschlussstelle (A), insbesondere einer stationären Anschlussstelle, der Energieführungskette (4) befestigt ist und dass die Außenhülle (20) ein gegenüber dem Detektor (40) ortsfestes Ende aufweist, insbesondere ein am Detektor bzw. an einem zum Detektor ortsfesten Befestigungspunkt festgelegtes Ende, aus welchem das eine Seilende (22A) des Zugseils herausgeführt ist.

9. Energieführungskette nach einem der vorstehenden Ansprüche, **dadurch gekennzeichnet, dass**
a) die Außenhülle (20) mit dem darin geführten Zugseil (22) zumindest abschnittsweise lose in der Energieführungskette verlegt sind;
und/oder
b) die Energieführungskette (4) Glieder (7) aufweist die zumindest in zwei Richtungen, insbesondere räumlich bzw. kugelgelenkartig, gegeneinander abwinkelbar sind, wobei Gelenkverbindungen (7A, 7B) zwischen je zwei miteinander gelenkig verbundenen Gliedern (7) vorgesehen sind, wobei jedes Glied (7) einen stirnseitig offenen Aufnahmeraum bildet der mittels radial außenseitiger kreisbogenförmiger Führungselemente begrenzt ist, sodass die Glieder (7) in Kettenlängsrichtung zumindest einen Führungskanal bilden, und
dass die Außenhülle (20) mit dem darin verlaufenden Längsabschnitt des Zugseils in dem von den Gliedern gebildeten Führungskanal angeordnet ist.

10. Energieführungskette nach einem der vorstehenden Ansprüche, insbesondere nach Anspruch 3, **dadurch gekennzeichnet, dass** die Energieführungskette in einer Verfahrebene unter Bildung eines ersten Trums, eines zweiten Trums und eines die Trume verbindenden Umlenkbogens verfahrbar ist, wobei die Energieführungskette Glieder aufweist die in Kettenlängsrichtung hintereinander angeordnet und zueinander jeweils um eine zur Verfahrebene im Wesentlichen senkrechte Schwenkachse zur Bildung des Umlenkbogens gegeneinander abwinkelbar sind, und wobei das erste Trum vorzugsweise mit einem relativbeweglichen Mitnehmer verbunden ist und das zweite Trum mit einer stationären Anschlussstelle verbunden ist, wobei und
dass die Außenhülle (20) mit dem darin verlaufenden Längsabschnitt des Zugseils (22) in einem vorzugsweise mitnehmerseitigen Längsabschnitt der Energieführungskette angeordnet ist, wobei das Betätigungsteil (24) des Zugseils (22) insbesondere an einem Kettenglied innerhalb der Energieführungskette befestigt bzw. in Kettenlängsrichtung festgelegt ist, wobei insbesondere
der mitnehmerseitige Längsabschnitt der Energieführungskette von einem endseitigen Kettenglied am Mitnehmer ausgeht und/oder vorzugsweise mindestens 10% der Kettenlänge, insbesondere mindestens 25% der Kettenlänge, umfasst.

11. **Anordnung** zur Überwachung der Energieführungskette nach einem der Ansprüche 1 bis 10, umfassend
- einen Detektor (40)
- ein Zugseil (22), welches mit einem Seilende (22A) mit dem Detektor (40) verbunden ist und mechanisch mit dem Detektor zusammenwirkt, insbesondere zur Erfassung eines Bruchs in der Energieführungskette (4), und
- eine flexible, in einer Zugrichtung drucksteife Außenhülle (20), in welcher zumindest ein Längsabschnitt des Zugseils (22) geführt ist,
wobei der Detektor (40) zur Erkennung einer Relativbewegung zwischen Zugseil und Außenhülle eingerichtet ist.

12. Anordnung nach Anspruch 11, **gekennzeichnet durch** ein oder mehrere kennzeichnende Merkmale eines der Ansprüche 1 bis 9.

13. Roboter, insbesondere industrieller Gelenkarmroboter (1), umfassend eine Energieführungskette mit Detektor-Anordnung nach einem der vorstehenden Ansprüche, insbesondere umfassend eine Energieführungskette (4) nach Anspruch 9 mit den Merkmalen des Unterpunktes b).

14. Gelenkarmroboter (1) nach Anspruch 13 umfassend einen Roboterarm (3a... 3e) mit einer Roboterhand, **dadurch gekennzeichnet**, ein Ende der Energieführungskette an einer ersten Anschlussstelle (B) an der Roboterhand festgelegt ist, wobei das vom Detektor (40) abgewandte Seilende (22B) des Zugseils (22) ortsfest zur ersten Anschlussstelle an der Roboterhand festgelegt ist und dass das andere Ende der Energieführungskette (4) an einer zweiten Anschlussstelle am Roboterarm festgelegt ist, wobei der Detektor (40) und die Außenhülle (22) ortsfest zur zweiten Anschlussstelle (A) am Roboterarm (3a... 3e) befestigt sind.

15. Überwachungssystem zum Schutz einer Energieführungskette gegen einen Leitungsabriss, umfassend eine Auswertungseinheit und **gekennzeichnet durch** eine Energieführungskette nach einem der Ansprüche 1 bis 10, wobei der mit dem Zugseil verbundene Detektor signaltechnisch an die Auswertungseinheit angeschlossen ist und die Auswertungseinheit eingerichtet ist um durch den Detektor erfasste Signale hinsichtlich eines möglichen Bruchs in der Energieführungskette auszuwerten, wobei die Auswertungseinheit im Falle eines erkannten Bruchs vorzugsweise ein Nothaltsignal und/oder ein Wartungssignal ausgibt.

## Claims

1. An energy guide chain (4) for guiding one or more lines, such as cables, hoses or the like, between two connection points (A, B) at least one of which is mobile relative to the other comprising
- a plurality of links (7) or segments connected to one another in the longitudinal direction of the chain, said links or segments being pivotable about at least one swivel axis, and
- an arrangement for monitoring the energy guide chain comprising a detector (40) and a pull rope (22), which runs in the longitudinal direction of the chain and interacts mechanically with the detector, in particular for detecting a rupture in the energy guide chain, **characterized in that** the arrangement has a flexible outer sheath (20) rigid in compression in a pull direction, in which at least one longitudinal portion of the pull rope (22) is guided,
**in that** the outer sheath (20) with the longitudinal portion of the pull rope (22) extending therein is guided at least along a longitudinal portion to be monitored comprising a plurality of links (7) or segments of the energy guide chain (4), by the energy guide chain (4), and
**in that** the detector (40) is provided and configured to identify relative motion of the pull rope (22) relative to the outer sheath (20), in particular connected with a rope end (22A) of the pull rope (22).

2. The energy guide chain according to Claim 1, **characterized in that** the arrangement has a tension spring (48), with which the pull rope (22) is pretensioned with pretensioning in the tensile force direction against the outer sheath.

3. The energy guide chain according to Claim 1 or Claim 2, **characterized in that** the arrangement has an actuating member (24) at the end on the outer sheath (20), which is displaceable relative to the pressure-resistant outer sheath (20) in the longitudinal direction of the chain and to which the other end (22B) of the pull rope remote from the detector is secured in a tensile stress-resistant manner,
**in particular wherein** the outer sheath (20) is secured to a first fastening point in the longitudinal direction of the chain, in particular to a chain link (7) in or on the energy guide chain (4) or to one of the connection points (A, B) outside the energy guide chain, and the actuating member (24) is secured to a second fastening point in the longitudinal direction of the chain, in particular to a chain link (7) in or on the energy guide chain (4) or to the other connection point (B, A) outside the energy guide chain, wherein the fastening points are selected such that the longitudinal portion to be monitored of the energy guide chain (4) lies between the two fastening points in the longitudinal direction of the chain.

4. The energy guide chain according to one of Claims 1 to 3, in particular according to Claims 2 and 3, **characterized in that** the detector (40) has a detector housing (42), to which preferably one end of the outer sheath (20) is attached, such that the detector housing (40) forms a support for absorbing compressive force for this end of the outer sheath, wherein
- an indicator element (44) connected to the one end (22A) of the pull rope (22) is mounted displaceably in the detector housing, in particular using a linear guide, and/or
- the detector housing (42) has an adjusting device, in particular an adjusting screw, for axial displacement of the outer sheath (20), in particular for the purpose of adjusting pretensioning of the outer sheath (20);
and/or
- the tension spring (48) is arranged on or in the detector housing (42) and acts on the end (22A) of the pull rope (22) and/or on the indicator element (44).

5. The energy guide chain according to one of preceding Claims 1 to 4, **characterized in that** the detector has an indicator element (44) connected to the one end (22A) of the pull rope, which indicator element is displaceably mounted, and at least one proximity switch (50), in particular an inductive and/or capacitive proximity switch, which interacts with the indicator element (44) to generate a signal which is dependent on the position thereof.

6. The energy guide chain according to one of the preceding claims, **characterized in that**
- the length of the outer sheath (20) amounts to a multiple of the chain pitch and/or at least 10% of the chain length, in particular at least 25% of the chain length of the energy guide chain; and/or
- the outer sheath (20) runs with at least a majority of its length along the energy guide chain (4), in particular within the energy guide chain; and/or
- the pull rope (22) has a greater length than the outer sheath (20) and/or is accommodated and guided with a majority of its length in the outer sheath (20).

7. The energy guide chain according to one of the preceding claims, **characterized in that** the outer sheath (20) is embodied as an elongate, in particular pull rope outer sheath for a Bowden cable, which forms a tubular cavity in which at least one longitudinal portion of the pull rope is guided, wherein
- the outer sheath (20) preferably comprises a tubular and/or continuous flat wire spiral or round wire spiral;
- the outer sheath (20) preferably has an external diameter of < 10 mm, in particular < 7 mm; and/or
- the pull rope (22) is embodied in particular as plastics rope or steel wire rope, to exhibit low elongation, preferably with a diameter of < 3 mm, in particular with a diameter of < 2 mm.

8. The energy guide chain according to one of the preceding claims, **characterized in that**, in particular according to Claim 3, the detector (40) is fastened to a connection point (A), in particular a stationary connection point, of the energy guide chain (4) and **in that** the outer sheath (20) has an end fixed relative to the detector (40), in particular an end secured to the detector or to a fastening point fixed relative to the detector, out of which end the one rope end (22A) of the pull rope is guided.

9. The energy guide chain according to one of the preceding claims, **characterized in that**
a) the outer sheath (20) with the pull rope (22) guided therein is placed at least in places loose in the energy guide chain;
and/or
b) the energy guide chain (4) has links (7) which are pivotable in at least two directions, in particular three-dimensionally or in the manner of a ball joint, relative to one another, wherein articulated joints (7A, 7B) are provided between each pair of links (7) connected together in articulated manner, wherein each link (7) forms a receiving space, open at the end, which is delimited by circular arc-shaped guide elements radially on the outside, such that in the longitudinal direction of the chain the links (7) form at least one guide channel, and **in that** the outer sheath (20) with the longitudinal portion of the pull rope extending therein is arranged in the guide channel formed by the links.

10. The energy guide chain according to one of the preceding claims, in particular according to Claim 3, **characterized in that** the energy guide chain is displaceable in a displacement plane, forming a first run, a second run and a deflection arc joining the runs, wherein the energy guide chain has links which are arranged one behind the other in the longitudinal direction of the chain and are pivotable relative to one another in each case about a predetermined swivel axis substantially perpendicular to the displacement plane, to form a deflection arc, and wherein the first run is preferably connected with a moving end capable of relative motion and the second run is connected to a stationary connection point, and **in that** the outer sheath (20) is arranged with the longitudinal portion of the pull rope (22) extending therein in a longitudinal portion of the energy guide chain preferably at the moving end, wherein the actuating member (24) of the pull rope (22) is in particular fastened to a chain link within the energy guide chain or secured in the longitudinal direction of the chain, in particular wherein
the longitudinal portion of the energy guide chain at the moving end starts from an end chain link at the moving end and/or comprises preferably at least 10% of the chain length, in particular at least 25% of the chain length.

11. An arrangement for monitoring the energy guide chain according to one of Claims 1 to 10 comprising
- a detector (40)
- a pull rope (22), which is connected by one rope end (22A) to the detector (40) and interacts mechanically with the detector, in particular for detecting a rupture in the energy guide chain (4), and
- a flexible outer sheath (20) rigid in compression in a pull direction, in which at least one longitudinal portion of the pull rope (22) is guided,
wherein the detector (40) is configured to identify relative motion between pull rope and outer sheath.

12. The arrangement according to Claim 11, **characterized by** one or more characterizing features of one of Claims 1 to 9.

13. A robot, in particular industrial articulated-arm robot (1), comprising an energy guide chain with detector arrangement according to one of the preceding claims, in particular comprising an energy guide chain (4) according to Claim 9 with the features of sub-item b).

14. The articulated-arm robot (1) according to Claim 13 comprising a robot arm (3a-3e) with a robot hand, **characterized in that** one end of the energy guide chain is secured to a first connection point (B) on the robot hand, wherein the end (22B) of the pull rope (22) remote from the detector (40) is secured fixedly to the first connection point on the robot hand, and **in that** the other end of the energy guide chain (4) is secured to a second connection point on the robot arm, wherein the detector (40) and the outer sheath (22) are fastened fixedly to the second connection point (A) on the robot arm (3a-3e).

15. A monitoring system for protecting an energy guide chain against line snapping comprising an evaluation unit and **characterized by** an energy guide chain according to one of Claims 1 to 10, wherein the detector connected to the pull rope is connected for signaling to the evaluation unit and the evaluation unit is configured to evaluate signals detected by the detector with regard to a possible rupture in the energy guide chain, wherein the evaluation unit preferably outputs an emergency stop signal and/or a maintenance signal in the case of an identified rupture.

## Revendications

1. Chaîne d'énergie (4) destinée à guider un ou plusieurs câbles, tuyaux ou similaires entre deux points de raccordement (A, B) dont au moins l'un est mobile par rapport à l'autre, comprenant
- une pluralité de maillons (7) ou segments reliés entre eux dans le sens longitudinal de la chaîne, qui peuvent être inclinés les uns par rapport aux autres autour d'au moins un axe de pivotement, et
- un dispositif de surveillance de la chaîne d'énergie, comprenant un détecteur (40) et un câble de traction (22) qui s'étend dans le sens longitudinal de la chaîne et coopère mécaniquement avec le détecteur, en particulier pour détecter une rupture dans la chaîne d'énergie,
**caractérisée en ce que** le dispositif comprend une enveloppe extérieure flexible (20) rigide à la pression dans un sens de traction, dans laquelle est guidée au moins une partie longitudinale du câble de traction (22),
**que** l'enveloppe extérieure (20) est guidée avec la partie longitudinale du câble de traction (22) s'étendant à l'intérieur de celle-ci, au moins le long d'une partie longitudinale à surveiller, comprenant plusieurs maillons (7) ou segments de la chaîne d'énergie (4), et
**que** le détecteur (40) est prévu et agencé pour détecter un mouvement relatif du câble de traction (22) par rapport à l'enveloppe extérieure (20) et est notamment relié à une extrémité (22A) du câble de traction (22).

2. Chaîne d'énergie selon la revendication 1,
**caractérisée en ce que** le dispositif comporte un ressort de traction (48) avec lequel le câble de traction (22) est précontraint dans le sens de la force de traction avec une précontrainte contre l'enveloppe extérieure.

3. Chaîne d'énergie selon la revendication 1 ou 2,
**caractérisée en ce que** le dispositif comporte, à l'extrémité de l'enveloppe extérieure, un élément d'actionnement (24) qui est mobile par rapport à l'enveloppe extérieure (20) résistante à la pression dans le sens longitudinal de la chaîne et sur lequel l'autre extrémité (22B) du câble de traction, opposée au détecteur, est fixée de manière résistante à la traction,
en particulier l'enveloppe extérieure (20) étant fixée en un premier point de fixation dans le sens longitudinal de la chaîne, en particulier sur un maillon de chaîne (7) dans ou sur la chaîne d'énergie (4) ou à l'un des points de raccordement (A, B) à l'extérieur de la chaîne d'énergie, et l'élément d'actionnement (24) est fixé à un deuxième point de fixation dans le sens longitudinal de la chaîne, en particulier à un maillon (7) dans ou sur la chaîne d'énergie (4) ou à l'autre point de raccordement (B, A) à l'extérieur de la chaîne d'énergie, les points de fixation étant choisis de telle sorte que la section longitudinale à surveiller de la chaîne d'énergie (4) se trouve dans le sens longitudinal de la chaîne entre les deux points de fixation.

4. Chaîne d'énergie selon l'une quelconque des revendications 1 à 3, en particulier selon les revendications 2 et 3, **caractérisée en ce que** le détecteur (40) comporte un boîtier de détecteur (42) sur lequel est fixée de préférence une extrémité de l'enveloppe extérieure (20), de sorte que le boîtier de détecteur (40) forme un appui pour absorber la force de pression pour cette extrémité de l'enveloppe extérieure, dans laquelle
- un élément indicateur (44) relié à l'une des extrémités (22A) du câble de traction (22) est monté de manière coulissante dans le boîtier de détecteur, en particulier au moyen d'un guidage linéaire;
et/ou
- le boîtier de détecteur (42) comporte un dispositif de réglage, en particulier une vis de réglage, pour le déplacement axial de l'enveloppe extérieure (20), en particulier dans le but de régler une précontrainte de l'enveloppe extérieure (20);
et/ou
- le ressort de traction (48) est disposé sur ou dans le boîtier de détecteur (42) et s'engage sur l'extrémité (22A) du câble de traction (22) et/ou sur l'élément indicateur (44).

5. Chaîne d'énergie selon l'une quelconque des revendications 1 à 4 précédentes, **caractérisée en ce que** le détecteur comporte un élément indicateur (44) relié à l'une des extrémités (22A) du câble de traction, qui est monté de manière coulissante, ainsi qu'au moins un détecteur de proximité (50), en particulier un détecteur de proximité inductif et/ou capacitif, qui coopère avec l'élément indicateur (44) afin de générer un signal dépendant de la position de celui-ci.

6. Chaîne d'énergie selon l'une quelconque des revendications précédentes, **caractérisée en ce que**
- la longueur de l'enveloppe extérieure (20) est un multiple du pas de la chaîne et/ou au moins 10 % de la longueur de la chaîne, en particulier au moins 25 % de la longueur de la chaîne d'énergie; et/ou
- l'enveloppe extérieure (20) s'étend au moins sur une partie prépondérante de sa longueur le long de la chaîne d'énergie (4), en particulier à l'intérieur de la chaîne d'énergie; et/ou
- le câble de traction (22) a une longueur supérieure à celle de l'enveloppe extérieure et/ou est logé et guidé dans l'enveloppe extérieure (20) sur une partie prépondérante de sa longueur.

7. Chaîne d'énergie selon l'une quelconque des revendications précédentes, **caractérisée en ce que** l'enveloppe extérieure (20) est réalisée sous la forme d'une enveloppe extérieure allongée, en particulier d'une enveloppe extérieure de câble de traction pour un câble Bowden, qui forme une cavité tubulaire dans laquelle au moins une section longitudinale du câble de traction est guidée, dans laquelle
- l'enveloppe extérieure (20) comprend de préférence une spirale tubulaire et/ou continue en fil plat ou en fil rond;
- l'enveloppe extérieure (20) présente de préférence un diamètre extérieur ≤ 10 mm, en particulier ≤ 7 mm; et/ou
- le câble de traction (22), en particulier sous forme de câble en plastique ou de câble en fil d'acier, est conçu pour être peu extensible, de préférence avec un diamètre ≤ 3 mm, avec un diamètre ≤ 2 mm.

8. Chaîne d'énergie selon l'une quelconque des revendications précédentes, **caractérisée,** en particulier selon la revendication 3, **en ce que** le détecteur (40) est fixé à un point de raccordement (A), en particulier à un point de raccordement fixe, de la chaîne d'énergie (4) et que l'enveloppe extérieure (20) présente une extrémité fixe par rapport au détecteur (40), en particulier une extrémité fixée au détecteur ou à un point de fixation fixe par rapport au détecteur, à partir de laquelle l'une des extrémités (22A) du câble de traction est sortie.

9. Chaîne d'énergie selon l'une quelconque des revendications précédentes, **caractérisée en ce que**
a) l'enveloppe extérieure (20) avec le câble de traction (22) guidé à l'intérieur de celle-ci sont posés de manière lâche dans la chaîne d'énergie, au moins par sections;
et/ou
b) la chaîne d'énergie (4) comporte des maillons (7) qui peuvent être inclinés les uns par rapport aux autres dans au moins deux directions, en particulier dans l'espace ou à la manière d'une articulation sphérique, des articulations (7A, 7B) étant prévues entre deux maillons (7) reliés de manière articulée l'un à l'autre, chaque maillon (7) formant un espace de réception ouvert à l'avant, qui est délimité par des éléments de guidage en forme d'arc de cercle situés radialement à l'extérieur, de sorte que les maillons (7) forment au moins un canal de guidage dans le sens longitudinal de la chaîne, et
que l'enveloppe extérieure (20) avec la partie longitudinale du câble de traction passant à l'intérieur de celle-ci est disposée dans le canal de guidage formé par les maillons.

10. Chaîne d'énergie selon l'une quelconque des revendications précédentes, en particulier selon la revendication 3, **caractérisée en ce que** la chaîne d'énergie est mobile dans un plan de déplacement en formant un premier brin, un deuxième brin et un coude de renvoi reliant les brins, la chaîne d'énergie comportant des maillons qui sont disposés les uns derrière les autres dans le sens longitudinal de la chaîne et qui peuvent être inclinés les uns par rapport aux autres autour d'un axe de pivotement sensiblement perpendiculaire au plan de déplacement afin de former le coude de renvoi, et le premier brin étant de préférence relié à un entraîneur mobile par rapport à lui et le deuxième brin étant relié à un point de raccordement fixe, et
**que** l'enveloppe extérieure (20) est disposée avec la partie longitudinale du câble de traction (22) s'étendant à l'intérieur de celle-ci, de préférence dans une section longitudinale de la chaîne d'énergie située du côté de l'entraîneur, l'élément d'actionnement (24) du câble de traction (22) étant fixé en particulier à un maillon de chaîne à l'intérieur de la chaîne d'énergie ou étant fixé dans le sens longitudinal de la chaîne, en particulier
la partie longitudinale de la chaîne d'énergie située du côté de l'entraîneur part d'un maillon d'extrémité de la chaîne sur l'entraîneur et/ou comprend de préférence au moins 10 % de la longueur de la chaîne, en particulier au moins 25 % de la longueur de la chaîne.

11. **Dispositif** de surveillance de la chaîne d'énergie selon l'une quelconque des revendications 1 à 10, comprenant
- un détecteur (40)
- un câble de traction (22) qui est relié par une extrémité (22A) au détecteur (40) et qui coopère mécaniquement avec le détecteur, en particulier pour détecter une rupture dans la chaîne d'énergie (4), et
- une enveloppe extérieure (20) flexible et rigide à la pression dans le sens de traction, dans laquelle est guidée au moins une partie longitudinale du câble de traction (22),
le détecteur (40) étant conçu pour détecter un mouvement relatif entre le câble de traction et l'enveloppe extérieure.

12. Dispositif selon la revendication 11, **caractérisé par** une ou plusieurs caractéristiques distinctives de l'une quelconque des revendications 1 à 9.

13. Robot, en particulier robot industriel à bras articulé (1), comprenant une chaîne d'énergie avec un dispositif de détection selon l'une quelconque des revendications précédentes, comprenant en particulier une chaîne d'énergie (4) selon la revendication 9 avec les caractéristiques du sous-point b).

14. Robot à bras articulé (1) selon la revendication 13, comprenant un bras de robot (3a... 3e) avec une main de robot, **caractérisé en ce qu'**une extrémité de la chaîne d'énergie est fixée à un premier point de raccordement (B) sur la main du robot, l'extrémité (22B) du câble de traction (22) opposée au détecteur (40) étant fixée de manière stationnaire au premier point de raccordement sur la main du robot, et **en ce que** l'autre extrémité de la chaîne d'énergie (4) est fixée à un deuxième point de raccordement sur le bras de robot, le détecteur (40) et l'enveloppe extérieure (22) étant fixés de manière fixe au deuxième point de raccordement (A) sur le bras de robot (3a... 3e).

15. Système de surveillance pour protéger une chaîne d'énergie contre une rupture de câble, comprenant une unité d'évaluation et **caractérisé par** une chaîne d'énergie selon l'une quelconque des revendications 1 à 10, le détecteur relié au câble de traction étant connecté à l'unité d'évaluation au niveau technique des signaux et l'unité d'évaluation étant conçue pour évaluer les signaux détectés par le détecteur en vue d'une rupture éventuelle dans la chaîne d'énergie, l'unité d'évaluation émettant de préférence un signal d'arrêt d'urgence et/ou un signal de maintenance en cas de rupture détectée.
